# DEMANDE DE BREVET EUROPEEN

(11) **EP 1 049 315 A1**
(43) Date de publication de la demande: **02.11.2000**
(21) Numéro de dépôt: 00401144.1
(22) Date de dépôt: 26.04.2000
(51) Int. Cl.: H04M 19/04

(54) **Procédé de commande de sonnerie dans une terminaison numérique de réseau généralisée**

(30) Priorité: 28.04.1999 FR 9905378
(71) Demandeur: SAGEM S.A., 75116 Paris (FR)
(72) Inventeur: Bailly, François, 75013 Paris (FR)
(74) Mandataire: Fruchard, Guy

(57) **Abrégé**

Le procédé de commande de sonnerie dans une terminaison numérique de réseau généralisée pour activer la sonnerie d'au moins deux postes téléphoniques au moyen d'au moins deux trains d'impulsions de sonnerie (8.1, 8.2) comprend les étapes d'établir entre les deux trains d'impulsions (8.1, 8.2) un décalage de phase suffisant pour que les impulsions (9.1, 9.2) des deux trains s'intercalent les unes entre les autres et de réduire une durée des impulsions (9.1, 9.2) d'au moins un des trains d'impulsions (8.1, 8.2).

## Description

La présente invention concerne un procédé de commande de sonnerie dans une terminaison numérique de réseau pour activer la sonnerie d'au moins deux postes téléphoniques, en particulier les postes téléphoniques analogiques d'une terminaison numérique de réseau généralisée.

Une terminaison numérique de réseau est raccordée à un réseau numérique et comporte une sortie numérique à laquelle sont connectés des postes téléphoniques numériques. Il est fréquemment demandé qu'une telle terminaison comporte en outre deux sorties analogiques pour le raccordement de deux postes téléphoniques analogiques (terminaison numérique de réseau généralisée). La sonnerie des postes téléphoniques et plus particulièrement celle des postes analogiques est activée au moyen de trains d'impulsions de sonnerie commandant un circuit de sonnerie qui nécessite une énergie relativement importante pour fonctionner. La terminaison numérique étant normalement alimentée par le secteur, la puissance disponible est suffisante pour alimenter le circuit de sonnerie. En revanche, lorsque le terminal fonctionne en mode dégradé en raison d'une coupure de l'alimentation secteur, la puissance nécessaire au fonctionnement de la terminaison est prélevée sur le réseau numérique et n'est pas suffisante pour actionner les sonneries de postes analogiques. Il est donc prévu un condensateur qui se charge en l'absence de commande de sonnerie et apporte un appoint d'énergie dans le circuit générateur de sonnerie à chaque impulsion de sonnerie. Le condensateur est habituellement dimensionné pour que la puissance fournie par le condensateur soit suffisante pour activer la sonnerie d'un des postes téléphoniques analogiques mais il s'avère insuffisant pour activer simultanément la sonnerie des deux postes téléphoniques analogiques.

Une solution consisterait à utiliser un condensateur de plus forte puissance mais cela poserait des problèmes de temps de charge d'un tel condensateur et de coût de celui-ci.

Il est connu du document EP-A-0 251 986 un procédé de commande de sonnerie dans une terminaison numérique de réseau généralisée pour activer la sonnerie de deux postes téléphoniques au moyen de deux trains d'impulsions de sonnerie commandant un circuit de sonnerie, le procédé comprenant l'étape d'établir entre les trains d'impulsions un décalage de phase suffisant pour que les impulsions des trains d'impulsions s'intercalent les unes entre les autres. Ceci permet d'étaler le temps de prélèvement d'énergie sur le réseau de sorte que la puissance prise sur le condensateur est constante et il est ainsi possible de fournir une puissance suffisante pendant toute la durée de commande des sonneries. La puissance consommée est toutefois importante.

Un but de l'invention est de proposer un procédé de commande de sonnerie dans une terminaison numérique de réseau adapté pour commander la sonnerie d'au moins deux postes tout en ne nécessitant qu'une puissance limitée pour sa mise en oeuvre.

En vue de la réalisation de ce but, on prévoit, selon l'invention, un procédé de commande de sonnerie dans une terminaison numérique de réseau généralisée qui comprend en outre une étape de réduire une durée des impulsions d'au moins un des trains d'impulsions. La puissance consommée à chaque impulsion est alors relativement faible de sorte que le bilan énergétique est amélioré.

Selon une version avantageuse de l'invention, les impulsions des trains d'impulsions sont séparées les unes des autres par un espacement.

Ainsi, le condensateur a le temps de se recharger entre deux impulsions et ne doit fournir à chaque décharge que la puissance nécessaire à l'activation de la sonnerie d'un des postes téléphoniques. Il est de la sorte possible d'activer simultanément la sonnerie de plusieurs postes téléphoniques au moyen d'un élément capacitif de puissance égale à celle nécessaire à l'activation de la sonnerie d'un seul poste. La réduction de la durée des impulsions d'au moins un des trains d'impulsions permet d'obtenir un espacement relativement grand entre les impulsions, ce qui améliore encore le rendement énergétique du procédé.

Avantageusement, l'espacement entre deux impulsions consécutives est sensiblement constant. La charge de l'élément capacitif est ainsi la même avant chaque utilisation.

D'autres caractéristiques et avantages de l'invention ressortiront à la lecture de la description qui suit d'un mode de mise en oeuvre particulier non limitatif de l'invention.

Il sera fait référence aux dessins annexés, parmi lesquels :

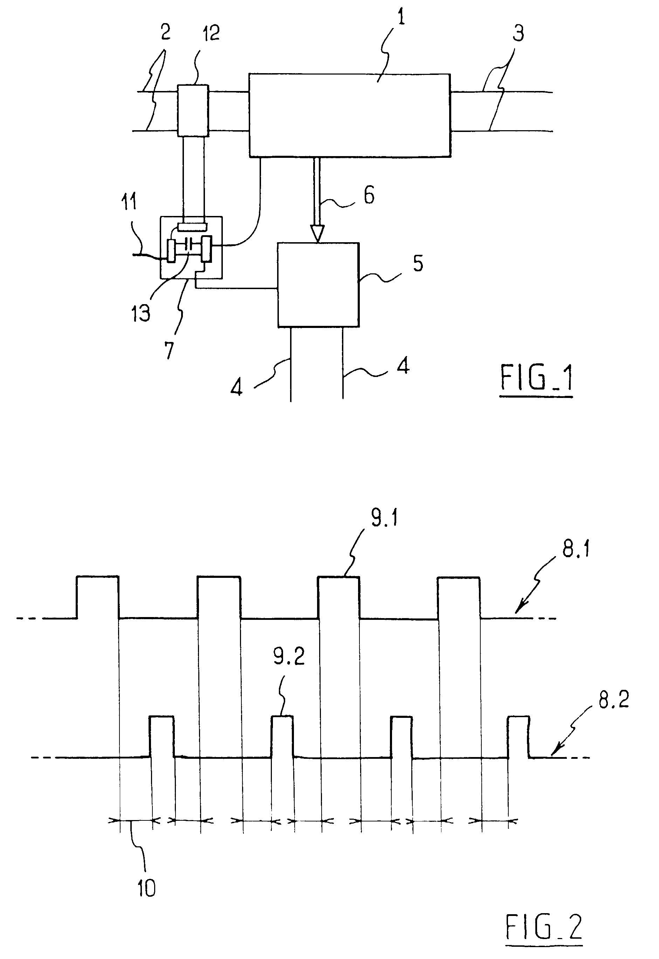

- la figure 1 est un schéma de la terminaison numérique de réseau généralisée utilisée pour la mise en oeuvre du procédé selon l'invention ;
- la figure 2 est un diagramme représentant de façon schématique deux trains d'impulsions lors de la mise en oeuvre de ce procédé.

En référence aux figures, le procédé conforme à l'invention est destiné à être mis en oeuvre par une terminaison numérique de réseau généralisée.

La terminaison comporte une unité centrale 1 qui est raccordée à un réseau numérique 2 par l'intermédiaire d'un organe de séparation 12 transmettant les signaux numériques à l'unité centrale 1 et la tension de télé-alimentation du réseau à un circuit d'alimentation 7. L'unité centrale 1 comporte une sortie numérique 3, par exemple sous forme d'un bus, et au moins deux sorties analogiques 4 auxquelles peuvent être raccordés des postes téléphoniques analogiques.

La terminaison comprend également un circuit générateur de sonnerie 5 disposé entre l'unité centrale 1 et les sorties analogiques 4 et relié à l'unité centrale 1 pour être commandé par l'intermédiaire d'une liaison 6. L'unité centrale 1 et le circuit de sonnerie 5 sont alimentés d'une part par le secteur illustré par un cordon d'alimentation 11 et d'autre part par le réseau par l'intermédiaire d'un circuit de prélèvement d'énergie 7 comprenant de façon connue en soi un condensateur 13.

Le procédé conforme à l'invention est particulièrement utile lorsqu'il est nécessaire de limiter la consommation d'énergie, par exemple lorsque la terminaison numérique de réseau généralisée fonctionne en mode dégradé à cause d'une coupure de l'alimentation secteur, mode dans lequel la terminaison n'est alimentée que par la télé-alimentation du réseau.

Lorsque l'unité centrale 1 reçoit un appel en provenance du réseau numérique 2 et destiné à un des postes analogiques, l'unité centrale transmet par la liaison 6 au circuit générateur de sonnerie 5 un signal 8.1 formé d'un train d'impulsions de sonnerie dont chaque impulsion 9.1 commande l'activation de la sonnerie. A chaque impulsion 9.1 reçue par le circuit générateur de sonnerie 5, le condensateur se décharge dans le circuit générateur de sonnerie 5 pour fournir à celui-ci la puissance complémentaire de celle venant du réseau pour activer la sonnerie dans le poste téléphonique concerné. Entre deux impulsions 9.1, le condensateur se recharge.

Lorsque l'unité centrale 1 reçoit deux appels destinés chacun à un des postes téléphoniques analogiques ou un seul appel destiné indifféremment à l'un des deux postes, l'unité centrale 1 transmet au circuit générateur de sonnerie 5 deux signaux 8.1 et 8.2 formés chacun d'un train d'impulsions de sonnerie 9.1, 9.2.

L'unité centrale 1 établit alors entre les deux signaux 8.1, 8.2 un décalage de phase suffisant pour que les impulsions 9.2 soient intercalées entre les impulsions 9.1. Le décalage de phase est réalisé soit par programmation soit par un circuit électronique de traitement.

L'unité centrale 1 réduit également la durée des impulsions d'au moins un des signaux, ici le signal 8.2. Ceci est particulièrement avantageux lorsqu'il est nécessaire d'activer la sonnerie d'un poste téléphonique alors que la sonnerie de l'autre poste est déjà en cours d'activation.

Dans le mode de mise en oeuvre préféré illustré, les impulsions consécutives 9.1, 9.2 des signaux 8.1 et 8.2 sont séparées par un espacement 10 pendant lequel le condensateur se recharge suffisamment pour fournir la puissance nécessaire à une activation de sonnerie. L'espacement 10 est constant.

Ainsi, la réduction de durée permet ici de limiter l'énergie nécessaire à l'activation de la sonnerie et d'allonger l'espacement entre les impulsions des signaux 8.1 et 8.2.

Bien entendu, l'invention n'est pas limitée au mode de réalisation décrit et on peut y apporter des variantes de réalisation sans sortir du cadre de l'invention tel que défini par les revendications.

En particulier si la puissance fournie par le réseau est telle que la puissance complémentaire requise du condensateur est faible, on peut prévoir un décalage de phase des trains d'impulsions juste nécessaire pour que l'énergie totale fournie par le réseau et le condensateur entre les deux recharges du condensateur soit suffisante pour assurer une activation des sonneries. A ce propos on notera que le nombre de postes n'est pas limité à deux.

## Revendications

1. Procédé de commande de sonnerie dans une terminaison numérique de réseau généralisée (1) pour activer la sonnerie d'au moins deux postes téléphoniques au moyen d'au moins deux trains d'impulsions de sonnerie (8.1, 8.2) commandant un circuit de sonnerie (5), le procédé comprenant l'étape d'établir entre les trains d'impulsions (8.1, 8.2) un décalage de phase suffisant pour que les impulsions (9.1, 9.2) des trains s'intercalent les unes entre les autres, caractérisé en ce qu'il comprend une étape de réduire une durée des impulsions (9.1, 9.2) d'au moins un des trains d'impulsions (8.1, 8.2).

2. Procédé selon la revendication 1, caractérisé en ce que les impulsions des trains d'impulsions sont séparées les unes des autres par un espacement.

3. Procédé selon la revendication 2, caractérisé en ce que l'espacement entre les impulsions consécutives (9.1, 9.2) est sensiblement constant.
